# EUROPÄISCHE PATENTSCHRIFT

(11) **EP 4 367 997 B1**
(45) Veröffentlichungstag und Bekanntmachung des Hinweises auf die Patenterteilung: **19.08.2026**
(21) Anmeldenummer: 23199288.4
(22) Anmeldetag: 25.09.2023
(51) Int. Cl.: A01B 73/06, A01D 84/00, A01D 89/00

(54) **SCHWADER MIT AUFNAHMEVORRICHTUNG**
WINDROWER WITH PICK-UP DEVICE
ANDAINEUSE AVEC DISPOSITIF DE RAMASSAGE

(30) Priorität: 09.11.2022 DE 102022129614
(43) Veröffentlichungstag der Anmeldung: 15.05.2024
(73) Patentinhaber: Maschinenfabrik Bernard Krone GmbH & Co. KG, 48480 Spelle (DE)
(72) Erfinder: Afting, Andreas, 48488 Emsbüren (DE); Hermes, Philip, 48480 Spelle (DE); Speller, Simon, 48496 Hopsten (DE)

(56) Entgegenhaltungen:
- WO-A1-2015/139970
- WO-A1-2020/222664
- DE-A1- 102010 010 862
- US-A- 5 177 944
- US-A1- 2006 162 308

## Beschreibung

Die vorliegende Erfindung betrifft einen Schwader nach dem Oberbegriff von Anspruch 1.

Schwader werden in der Landwirtschaft eingesetzt, um am Boden liegendes Erntegut, zum Beispiel Gras, Luzerne, Leguminosen oder Heu, zu Schwaden zusammenzufassen. Dies kann beispielsweise dazu dienen, das Erntegut besser vor Feuchtigkeit zu schützen oder es für eine nachfolgende Aufnahme mit einer Ballenpresse, einem Ladewagen oder dergleichen vorzubereiten. Allgemein fördert der Schwader das Erntegut zu einer Seite oder zur Mitte, wodurch ein Schwad entsteht. Ein gängiger Schwader ist der Kreiselschwader, der einen oder mehrere rotierende Rechkreisel verwendet, bei denen jeweils eine Mehrzahl von Zinkenarmen um eine gemeinsame Achse rotiert. Die Zinken eines Zinkenarms werden dicht über den Boden geführt und erfassen dabei das Erntegut, führen es über eine gewisse Wegstrecke mit, bevor es in einer Reihe abgelegt wird. Um den Ablageort wenigstens ungefähr zu kontrollieren, ist oftmals wenigstens ein Fangelement (zum Beispiel ein Pralltuch) vorgesehen, das radial außerhalb der Bewegungsbahn der Zinken angeordnet werden kann.

Ein anderer Typ ist der sogenannte Bandschwader, bei welchem das Erntegut mit einer Aufnahmevorrichtung, normalerweise einer Pick-up mit wenigstens einem Aufnahmerotor, vom Boden aufgehoben und an eine nachgeordnete Querfördervorrichtung übergeben wird. Diese fördert das Erntegut mit einem Förderband oder dergleichen quer zur Fahrtrichtung und legt es seitlich wieder ab. Im Vergleich zu einem Kreiselschwader wird vermieden, dass das Erntegut über den Boden geführt wird, wobei es verschmutzt oder sogar beschädigt werden kann. Es sind auch Bandschwader mit wenigstens zwei Schwadereinheiten bekannt, die einzeln an Seitenauslegern angeordnet sind und die jeweils eine Aufnahmevorrichtung und eine Querfördervorrichtung aufweisen. Durch eine wahlweise unterschiedliche Einstellung der Förderrichtung kann das Erntegut dann entweder links, rechts oder mittig abgelegt werden.

Für eine optimale Erntegutaufnahme ist es wesentlich, dass die Aufnahmevorrichtung auch bei unebenem Bodenprofil in einem ungefähr gleichbleibenden Abstand über den Boden geführt wird. Hierzu ist es bekannt, die gesamte Schwadereinheit beweglich gegenüber einem Hauptrahmen des Schwaders, insbesondere des Bandschwaders, aufzuhängen, so dass sie sich dem Profil des Bodens folgend heben und senken kann. Problematisch ist dabei allerdings die große Masse der Schwadereinheit, die sie vergleichsweise träge macht. Ein genaues Abfahren eines Bodenprofils ist daher kaum möglich.

Aus der DE 10 2010 010 862 A1 ist eine Heuwerbungsmaschine bekannt, mit einer Aufsammelvorrichtung, einem Zwischenförderer und einem Querförderer. Die Aufsammelvorrichtung kann höhenverstellbar an einem Maschinenrahmen gelagert sein und auch höhenverstellbar gegenüber dem Querförderer sein.

Die US 2006/162308 A1 offenbart einen Schwader mit einer Querfördervorrichtung und einer Aufnahmevorrichtung. Die Aufnahmevorrichtung kann über eine Drehmoment-Baugruppe beweglich mit einem Rahmen verbunden sein.

Weiterer einschlägiger Stand der Technik ist der US 5 177 944 A, der WO 2020/222664 A1 und der WO 2015/139970 A1 zu entnehmen.

Aufgabe der Erfindung ist es, bei einem Schwader eine verbesserte dynamische Anpassung an ein Bodenprofil zu ermöglichen.

Die Aufgabe wird gelöst mit einem Schwader mit den Merkmalen des unabhängigen Patentanspruchs 1. Vorteilhafte Ausführungsformen sind den abhängigen Ansprüchen entnehmbar.

Dafür wird ein Schwader geschaffen, mit einem Hauptrahmen, der im Betriebszustand über ein Fahrwerk abstützbar ist, sowie mit wenigstens einer mit dem Hauptrahmen verbundenen Schwadereinheit, die eine Aufnahmevorrichtung aufweist sowie eine in einer Arbeitskonfiguration der Schwadereinheit bezüglich einer Schwader-Längsachse wenigstens überwiegend dahinter angeordnete Querfördervorrichtung mit einem Querförderrahmen, wobei die Aufnahmevorrichtung dazu eingerichtet ist, in der Arbeitskonfiguration landwirtschaftliches Erntegut vom Boden aufzunehmen und an die Querfördervorrichtung zu übergeben, und die Querfördervorrichtung dazu eingerichtet ist, das übergebene Erntegut entlang einer Schwader-Querachse zu fördern und schwadweise auf dem Boden abzulegen, wobei die Aufnahmevorrichtung sowohl gegenüber dem Querförderrahmen als auch gegenüber dem Hauptrahmen wenigstens bezüglich einer Schwader-Hochachse höhenbeweglich ist und die Aufnahmevorrichtung über eine Aufnahme-Aufhängung höhenbeweglich mit dem Querförderrahmen verbunden ist, wobei die Aufnahme-Aufhängung eine Mehrzahl von entlang der Schwader-Querachse beabstandeten Aufhängungseinheiten aufweist.

Der Schwader dient dazu, landwirtschaftliches Erntegut, zum Beispiel Gras oder Heu, welches beispielsweise flächig und/oder zufällig verteilt auf dem Boden liegt, in Schwaden abzulegen. Derartige Maschinen werden auch als Merger oder als Heuwerbungsmaschinen bezeichnet, wobei die Anwendbarkeit ausdrücklich nicht auf Heu beschränkt ist. Normalerweise verfügt der Schwader über keinen eigenen Fahrantrieb und ist dazu vorgesehen, von einem Schlepper gezogen oder evtl. auch als Anbaugerät von einer Landmaschine front- oder heckseitig getragen zu werden. Eine Ausgestaltung mit eigenen Fahrantrieb ist allerdings denkbar.

Der Schwader weist einen Hauptrahmen auf. Dieser Hauptrahmen kann gewissermaßen das zentrale Element des Schwaders bilden und wesentlich für dessen strukturelle Stabilität verantwortlich sein. Er ist in sich normalerweise starr ausgebildet, kann allerdings aus einer Mehrzahl miteinander verbundener Bauteile bestehen. Im Betriebszustand ist der Hauptrahmen über ein Fahrwerk abstützbar. Der Hauptrahmen kann das Fahrwerk aufweisen, das somit Teil des Schwaders ist. Wenn der Schwader als Anbaugerät ausgelegt ist, ist er im Betriebszustand an eine Landmaschine angekoppelt, die das Fahrwerk aufweist. In jedem Fall kann über den Hauptrahmen und das Fahrwerk wenigstens ein Teil der Gewichtskraft des Schwaders aufgenommen und bodenseitig abgestützt werden. Der Hauptrahmen kann außerdem zur wenigstens indirekten Verbindung mit einem Schlepper ausgebildet sein, wobei eine hierfür genutzte Deichsel als Teil des Hauptrahmens angesehen werden kann. Alternativ kann der Hauptrahmen Strukturen zur Verbindung mit einer Landmaschine aufweisen, die einen Einsatz als Anbaugerät ermöglichen.

Wenigstens eine Schwadereinheit ist wenigstens indirekt mit dem Hauptrahmen verbunden. Typischerweise ist die Schwadereinheit nicht direkt, sondern indirekt, über wenigstens ein zwischengeordnetes Element, mit dem Hauptrahmen verbunden. Typischerweise sind entweder genau eine Schwadereinheit oder genau zwei Schwadereinheiten vorgesehen. Die jeweilige Schwadereinheit kann mit einem Seitenausleger verbunden sein, der seinerseits mit dem Hauptrahmen verbunden ist oder einen Teil desselben bildet. Die Schwadereinheit weist diejenigen Elemente des Schwaders auf, die bestimmungsgemäß direkt mit dem Erntegut in Kontakt kommen und dieses transportieren.

Die jeweilige Schwadereinheit weist eine Aufnahmevorrichtung auf sowie eine in einer Arbeitskonfiguration des Schwaders bezüglich einer Schwader-Längsachse wenigstens überwiegend dahinter angeordnete Querfördervorrichtung mit einem Querförderrahmen. Die Arbeitskonfiguration bezeichnet eine Konfiguration, in der sich der Schwader zur Feldbearbeitung befindet. Je nach Ausgestaltung ist es möglich, dass der Schwader nur diese Konfiguration annehmen kann, typischerweise kann er allerdings mehrere Konfiguration annehmen, beispielsweise zum Durchfahren eines Vorgewendes, für eine Straßenfahrt oder dergleichen. In anderen Konfigurationen können Elemente des Schwaders und insbesondere die wenigstens eine Schwadereinheit anders angeordnet sein, so dass die hier gemachten Aussagen nicht gelten. Es ist auch denkbar, dass der Schwader eine Mehrzahl von Arbeitskonfigurationen annehmen kann. In der Arbeitskonfiguration ist die Querfördervorrichtung wenigstens überwiegend hinter der Aufnahmevorrichtung angeordnet, und zwar bezüglich der Schwader-Längsachse, die normalerweise parallel oder antiparallel zur Fahrtrichtung verläuft. Unter Umständen können die Aufnahmevorrichtung und die Querfördervorrichtung bezüglich der Schwader-Längsachse teilweise überlappen. Die Aufnahmevorrichtung ist dazu eingerichtet, in der Arbeitskonfiguration landwirtschaftliches Erntegut vom Boden aufzunehmen und an die Querfördervorrichtung zu übergeben. Zu diesem Zweck weist die Aufnahmevorrichtung typischerweise wenigstens einen Rotor auf, welcher das Erntegut vom Boden aufnimmt und mittels einer Drehbewegung aufwärts sowie nach hinten fördert. Insbesondere können zwei Rotoren vorgesehen sein, von denen einer, der Aufnahmerotor, das Erntegut aufnimmt und an den zweiten, den Übergaberotor, übergibt, der es wiederum an die Querfördervorrichtung übergibt. In diesem Zusammenhang schließt der Begriff "übergeben" auch ein Werfen beziehungsweise Fallenlassen ein, wobei das Erntegut zwischenzeitig weder Kontakt mit der Aufnahmevorrichtung noch mit der Querfördervorrichtung hat.

Die Querfördervorrichtung ist dazu eingerichtet, das übergebene Erntegut entlang einer Schwader-Querachse zu fördern und schwadweise auf dem Boden abzulegen. Die Querfördervorrichtung weist hierzu ein Förderelement auf, in aller Regel ein endlos umlaufendes Förderelement, beispielsweise ein Förderband oder Gliederband, es könnte sich aber auch um eine andere Art vor Förderelement handeln, beispielsweise eine Förderschnecke. Im Falle eines Förder- oder Gliederbandes kann der Schwader auch als Bandschwader bezeichnet werden. Die Schwader-Querachse verläuft im rechten Winkel zu o.g. Schwader-Längsachse. Normalerweise fördert die Querfördervorrichtung das Erntegut parallel zur Schwader-Querachse, sie könnte es allerdings auch in einem gewissen Winkel zur Schwader-Querachse fördern. Der Querförderrahmen bildet dabei einen nicht an der Förderbewegung teilnehmenden Bestandteil der Querfördervorrichtung, an welchem das Förderelement beweglich gelagert ist. Der Querförderrahmen verleiht der Querfördervorrichtung insgesamt mechanische Stabilität und ist normalerweise in sich starr ausgebildet.

Normalerweise ist der Querförderrahmen bezüglich einer Schwader-Hochachse gegenüber dem Hauptrahmen zumindest höhenbeweglich. Die Schwader-Hochachse verläuft senkrecht zur Schwader-Längsachse und zur Schwader-Querachse. Bezüglich dieser Schwader-Hochachse ist der Querförderrahmen gegenüber dem Hauptrahmen also in der Regel höhenbeweglich. Anders ausgedrückt, er ist derart wenigstens indirekt mit dem Hauptrahmen verbunden, dass er gegenüber diesem höhenbeweglich ist. Entsprechend kann der Querförderrahmen (und somit die Querfördervorrichtung insgesamt) unterschiedliche Höhenpositionen relativ zum Hauptrahmen einnehmen. Die Beweglichkeit kann rein passiv gegeben sein, so dass der Querförderrahmen durch äußere Kräfte beweglich ist. Alternativ oder zusätzlich kann auch wenigstens ein Aktor vorgesehen sein, um die Höhenposition aktiv zu verändern. Zusätzlich zu der Beweglichkeit entlang der Schwader-Hochachse kann auch eine Beweglichkeit entlang der Schwader-Längsachse und/oder der Schwader-Querachse gegeben sein. Insbesondere muss der Querförderrahmen nicht parallel zur Schwader-Hochachse beweglich sein. Abgesehen von translatorischen Bewegungen des Querförderrahmens sind auch rotatorische Bewegung denkbar, beispielsweise ein Querpendeln (entsprechend einer Rotation um die Schwader-Längsachse).

Dabei ist die Aufnahmevorrichtung sowohl gegenüber dem Querförderrahmen als auch gegenüber dem Hauptrahmen wenigstens bezüglich der Schwader-Hochachse höhenbeweglich. Dies bezieht sich auf die Aufnahmevorrichtung in ihrer Gesamtheit, welche ihre Höhenposition bezüglich der Schwader-Hochachse sowohl gegenüber dem Hauptrahmen als auch gegenüber dem Querförderrahmen verändern kann. Dies kann sich sowohl auf eine passive Beweglichkeit als auch auf eine aktive Beweglichkeit durch einen oder mehrere Aktoren beziehen. Die Bewegung bezüglich der Schwader-Hochachse kann von einer Bewegung entlang der Schader-Längsachse und/oder der Schader-Querachse überlagert sein oder auch von einer rotatorischen Bewegung. In jedem Fall ist ein Anheben und Absenken der Aufnahmevorrichtung auf diese Weise auch ohne ein Anheben und Absenken des Querförderrahmens oder der Querfördervorrichtung möglich. Daher kann sich die Aufnahmevorrichtung, einem Bodenprofil folgend, gegenüber dem Hauptrahmen heben und senken, ohne dass hierzu auch die Querfördervorrichtung mit bewegt werden muss. Das heißt, die im Allgemeinen als erheblich anzusehende Masse der Querfördervorrichtung kann auf einer Höhe verbleiben, wodurch eine dynamische Anpassung an Bodenunebenheiten kurzzeitig möglich ist. Daher kann die Schwadereinheit schneller und präziser auf das aktuelle Bodenprofil reagieren.

Die Aufnahmevorrichtung ist über eine Aufnahme-Aufhängung höhenbeweglich mit dem Querförderrahmen verbunden. Somit ist also die Aufnahmevorrichtung über die Aufnahme-Aufhängung und den Querförderrahmen (sowie gegebenenfalls weitere zwischengeordnete Elemente) mit dem Hauptrahmen verbunden. Anders ausgedrückt, der Kraftfluss zwischen dem Hauptrahmen und der Aufnahmevorrichtung verläuft über den Querförderrahmen. Die Aufnahme-Aufhängung ist dabei derart ausgebildet, dass sie die vorgesehene Höhenbeweglichkeit ermöglicht. Sie kann beispielsweise eine Linearführung aufweisen. Zusätzlich oder insbesondere alternativ kann sie wenigstens einen Aufhängungslenker aufweisen, der sowohl mit der Aufnahme-Aufhängung als auch mit dem Querförderrahmen schwenkbar verbunden ist. Auch andere, hier nicht genannte Aufhängungselemente können zur Realisierung der Aufnahme-Aufhängung genutzt werden. Wenngleich eine weitere Anbindung der Aufnahmevorrichtung zum Hauptrahmen nicht ausgeschlossen ist, ist es bevorzugt, dass die Aufnahmevorrichtung ausschließlich über die Aufnahme-Aufhängung und den Querförderrahmen mit dem Hauptrahmen verbunden ist. Die Aufnahme-Aufhängung kann insbesondere vollständig passiv ausgebildet sein, sie könnte aber auch wenigstens ein aktives Element aufweisen, zum Beispiel einen Aktor. Auch ist es möglich, dass die Aufnahme-Aufhängung wenigstens ein Rückstellelement oder Federelement aufweist, das eine von der Auslenkung der Aufnahmevorrichtung abhängige Rückstellkraft zwischen dieser und dem Querförderrahmen erzeugt. Auf diese Weise könnte die Querfördervorrichtung zum Beispiel zeitverzögert den Bewegungen der Aufnahmevorrichtung folgen oder umgekehrt.

Die Aufnahme-Aufhängung weist eine Mehrzahl von entlang der Schwader-Querachse beabstandeten Aufhängungseinheiten auf. Normalerweise sind zwei oder drei Aufhängungseinheiten vorgesehen, es wäre allerdings auch eine größere Anzahl möglich. Bevorzugt sind die Aufhängungseinheiten voneinander mechanisch unabhängig, so dass jede Aufhängungseinheit eine Höhenverstellung eines bestimmten Abschnitts der Aufnahmevorrichtung ermöglicht. In diesem Fall ist es also abgesehen von einem Anheben oder Absenken der gesamten Aufnahmevorrichtung auch möglich, einen Teil (zum Beispiel die linke Seite) der Aufnahmevorrichtung anzuheben, während ein anderer Teil (zum Beispiel die rechte Seite) in der gleichen Höhe verbleibt oder abgesenkt wird.

Erfindungsgemäß weist wenigstens eine Aufhängungseinheit eine Doppellenker-Aufhängung auf. Das heißt, in diesem Fall sind zwei Aufhängungslenker vorgesehen, die einerseits schwenkbar mit dem Querförderrahmen verbunden sowie andererseits schwenkbar mit der Aufnahmevorrichtung verbunden sind. Insbesondere kann es sich um eine Parallelogramm-Aufhängung handeln. Bei einer idealen Parallelogramm-Aufhängung ist die Länge der beiden Aufhängungslenker (genauer gesagt, der Abstand zwischen den endseitigen Schwenklagern) identisch und die Aufhängungslenker sind exakt parallel. In diesem Zusammenhang wird allerdings auch eine Aufhängung noch als "Parallelogramm-Aufhängung" betrachtet, bei welcher die Längen der Aufhängungslenker geringfügig voneinander abweichen, zum Beispiel um maximal 5 %, ebenso wie eine Aufhängung, bei der die Lenker nicht exakt parallel verlaufen, sondern in einem geringen Winkel, von zum Beispiel maximal 10°. Durch die Parallelogramm-Aufhängung wird erreicht, dass bei einer translatorischen Höhenverschiebung der Aufnahmevorrichtung gegenüber dem Querförderrahmen keine (oder nur eine vernachlässigbare) rotatorische Bewegung der Aufnahmevorrichtung erfolgt. Das heißt, die Aufnahmevorrichtung verbleibt immer in der gleichen Orientierung. Prinzipiell lässt sich die Doppellenker-Aufhängung mit einfachen Schwenklagern realisieren, welche also nur einen Freiheitsgrad aufweisen. In vielen Fällen ist es allerdings vorteilhaft oder sogar notwendig, Schwenklager mit mehreren Freiheitsgraden einzusetzen, zum Beispiel Kugelgelenke.

Für eine optimale Nutzung des zur Verfügung stehenden Bauraums und um das Fördern des Ernteguts an der Oberseite der Querfördervorrichtung nicht zu behindern, ist es bevorzugt, dass die Aufnahme-Aufhängung wenigstens teilweise unterhalb der Querfördervorrichtung angeordnet ist. Diese Anordnung ist insofern auch vorteilhaft, als Wartung, Reparatur sowie gegebenenfalls Einstellung der Aufnahme-Aufhängung vorgenommen werden können, ohne die Querfördervorrichtung zu demontieren. Alternativ oder gleichzeitig ist es allerdings auch denkbar, dass die Aufnahme-Aufhängung wenigstens teilweise innerhalb der Querfördervorrichtung angeordnet ist. Wenigstens ein Element der Aufnahme-Aufhängung kann dabei durch die Querfördervorrichtung hindurchgeführt sein.

Wenigstens eine Aufhängungseinheit kann einen Aufhängungslenker aufweisen, der sich von einem bezüglich der Schwader-Längsachse hinteren Bereich des Querförderrahmens nach vorne zur Aufnahmevorrichtung erstreckt. Der Aufhängungslenker ist in sich starr ausgebildet und ist sowohl mit dem Querförderrahmen als auch mit der Aufnahmevorrichtung schwenkbar verbunden. Das jeweilige Schwenklager kann einen oder mehrere Freiheitsgrade aufweisen. Eine Höhenveränderung der Aufnahmevorrichtung entspricht einer Schwenkbewegung des Aufhängungslenkers. Da die Aufnahmevorrichtung wenigstens überwiegend vor der Querfördervorrichtung angeordnet ist, muss der Aufhängungslenker vergleichsweise lang ausgebildet sein, um sich von dem hinteren Bereich bis zur Aufnahmevorrichtung zu erstrecken. Seine Länge kann zum Beispiel zwischen 70% und 150% der Länge des Querförderrahmens entlang der Schwader-Längsachse entsprechen. Entsprechend der vergleichsweise großen Länge lässt sich eine bestimmte Höhenänderung mit einem vergleichsweise kleinen Schwenkwinkel realisieren. Dies ermöglicht eine näherungsweise geradlinige Verlagerung und/oder eine Verlagerung, die überwiegend in Richtung der Schwader-Hochachse erfolgt. Im Vergleich zu einer Linearführung ist die Verbindung mittels eines Aufhängungslenkers allerdings einfacher zu realisieren, weniger störungsanfällig und auch weniger wartungsbedürftig. In aller Regel ist es notwendig, dass wenigstens ein Aufhängungslenker dazu eingerichtet ist, entlang der Schwader-Querachse zwischen Aufhängungseinheit und Querförderrahmen wirkende Kräfte aufzunehmen. Dieser Aufhängungslenker stabilisiert die Aufhängungseinheit bezüglich der Schwader-Querachse. Er kann zum Beispiel auf Seiten des Querförderrahmens ein Schwenklager mit nur einem Freiheitsgrad aufweisen, welches nur eine Schwenkbewegung um die Schwader-Querachse zulässt. Ein derart stabilisierender Lenker kann auch als Querführungslenker bezeichnet werden. Insbesondere können die Aufhängungslenker der Doppellenker-Aufhängung mit dem hinteren Bereich des Querförderrahmens verbunden sein. Einer der beiden Lenker einer Doppellenker-Aufhängung kann als Querführungslenker ausgebildet sein. Oftmals lässt sich diese Funktion aber besser durch einen einzelnen Aufhängungslenker realisieren.

Im Stand der Technik sind Aufnahmevorrichtungen bekannt, die das Erntegut gewissermaßen auf eine Querfördervorrichtung aufschieben. Eine derartige Konfiguration, bei der die Übergabe des Erntegutes gewissermaßen in einer Ebene erfolgt, ist im Rahmen der vorliegenden Erfindung nicht ausgeschlossen, kann allerdings zu Problemen führen, wenn sich die vertikale Position der Aufnahmevorrichtung gegenüber der Querfördervorrichtung verändert. Es ist daher bevorzugt, dass die Aufnahmevorrichtung dazu eingerichtet ist, das Erntegut bezüglich der Schwader-Hochachse oberhalb der Querfördervorrichtung abzugeben und auf diese abzuwerfen. Eine derartige Ausführungsform lässt sich insbesondere, wenngleich nicht ausschließlich, mit zwei Rotoren realisieren, von denen ein Aufnahmerotor das Erntegut vom Boden aufnimmt und an einen höher angeordneten Übergaberotor übergibt. In jedem Fall erstreckt sich bei dieser Ausführungsform die Aufnahmevorrichtung höher als die Querfördervorrichtung, und zwar unabhängig von der aktuellen Auslenkung der Aufnahmevorrichtung gegenüber dem Querförderrahmen. Je nach Ausführungsform lässt sich nicht exakt bestimmen, an welchem Punkt und somit in welcher Höhe das Erntegut von der Aufnahmevorrichtung abgegeben wird. Normalerweise lässt sich allerdings ein typischer Abgabebereich identifizieren. Bei der hier beschriebenen Ausführungsform ist dieser Abgabebereich oberhalb der Querfördervorrichtung. Das heißt das Erntegut wird entweder senkrecht oder schräg auf die Querfördervorrichtung abgeworfen.

Aus unterschiedlichen Gründen kann es vorteilhaft sein, die Bewegung der Aufnahmevorrichtung gegenüber dem Querförderrahmen zu begrenzen, beispielsweise weil eine extreme Höhenveränderung die Erntegutübergabe deutlich beeinträchtigen würde. Eine Ausgestaltung sieht vor, dass die Aufnahmevorrichtung relativ zum Querförderrahmen bis in eine Anschlagposition auslenkbar ist, bei deren Erreichen die Aufnahmevorrichtung über einen entlang der Schwader-Hochachse wirkenden Formschluss mit dem Querförderrahmen zusammenwirkt. Wenngleich hier von "einer" Anschlagposition die Rede ist, können bevorzugt eine obere Anschlagposition sowie eine untere Anschlagposition definiert sein. Solange die jeweilige Anschlagposition noch nicht erreicht ist, ist die Aufnahmevorrichtung gegenüber dem Querförderrahmen höhenbeweglich. Wird die Anschlagposition erreicht, kommt es zu einem Formschluss, der entlang der Schwader-Hochachse wirkt, also wenigstens anteilig in vertikaler Richtung. Durch diesen Formschluss ist eine weitere Höhenbewegung der Aufnahmevorrichtung nur möglich, wenn sich der Querförderrahmen gleichzeitig mitbewegt. Der Formschluss kann unmittelbar zwischen der Aufnahmevorrichtung und dem Querförderrahmen hergestellt werden, gemäß einer typischen Ausführungsform entsteht er allerdings unter Beteiligung wenigstens eines zwischengeordneten Elements. Insbesondere kann er zwischen der Aufnahme-Aufhängung und dem Querförderrahmen entstehen.

Gemäß einer bevorzugten Ausgestaltung ist eine Anschlagposition durch ein Ende einer sich entlang der Schwader-Hochachse erstreckende, wenigstens einseitig geschlossene Ausnehmung definiert, in welche ein Anschlagteil eingreift, welches bei einer Auslenkung der Aufnahmevorrichtung entlang der Schwader-Hochachse relativ zur Ausnehmung auslenkbar ist. Dies kann insbesondere im Falle von zwei Anschlagpositionen für beide Anschlagpositionen gelten. Die Ausnehmung kann beispielsweise als Schlitz oder Langloch ausgebildet sein. Sofern die Ausnehmung nur einseitig geschlossen ist, ist nur eine Anschlagposition definiert. Wenn die Ausnehmung beidseitig geschlossen ist, definiert sie zwei Anschlagpositionen. Die Ausnehmung kann insbesondere im oder am Querförderrahmen ausgebildet sein. Das Anschlagteil greift in die Ausnehmung ein und kann insbesondere durch diese hindurchgeführt sein. Es kann starr mit der Aufnahmevorrichtung verbunden sein. Es kann aber auch als Aufhängungsteil der Aufnahme-Aufhängung ausgebildet sein, welches durch die Ausnehmung hindurchgeführt ist, normalerweise entlang der Schwader-Längsachse. Umgekehrt könnte aber auch das Anschlagteil am Querförderrahmen angeordnet sein und die Ausnehmung könnte an der Aufnahmevorrichtung oder an der Aufnahme-Aufhängung ausgebildet sein. Innerhalb eines gewissen Bereichs kann sich das Anschlagteil frei innerhalb der Ausnehmung bewegen, wenn sich die Höhenposition der Aufnahmevorrichtung ändert. Bei Erreichen der Anschlagposition kommt es zu einem Formschluss zwischen dem Rand der Ausnehmung und dem Anschlagteil. Das o.g. Aufhängungsteil kann insbesondere ein Aufhängungslenker sein, welcher einerseits schwenkbar mit dem Querförderrahmen verbunden sowie andererseits schwenkbar mit der Aufnahmevorrichtung verbunden ist. Es kann sich um einen einzelnen Aufhängungslenker oder insbesondere einen Aufhängungslenker einer o.g. Doppellenker-Aufhängung handeln.

Bevorzugt weist die Aufnahmevorrichtung Bodenführungselemente auf, über welche sie wenigstens anteilig bodenseitig abstützbar ist. Die Bodenführungselemente dienen einerseits dazu, wenigstens einen Teil der Gewichtskraft der Aufnahmevorrichtung an den Boden weiterzugeben, so dass dieser nicht an den Querförderrahmen und/oder den Hauptrahmen weitergegeben wird. Insbesondere dienen die Bodenführungselemente allerdings dazu, gewissermaßen das Bodenprofil zu ertasten und somit einen optimalen Abstand der Aufnahmevorrichtung zum Boden einzuhalten. Das heißt, die Aufnahmevorrichtung wird mittels der Bodenführungselemente am Bodenprofil entlang geführt. Bei den Bodenführungselementen könnte es sich insbesondere um Räder, Rollen, Walzen oder auch Kufen handeln. Die Bodenführungselemente können einen Teil der Aufnahmevorrichtung bilden beziehungsweise direkt mit dieser verbunden sein. Es wäre aber auch möglich, dass die Bodenführungselemente mit einem an die Aufnahmevorrichtung angrenzenden Teil der Aufnahme-Aufhängung verbunden sind. Dabei kann insbesondere jeweils einem Aufhängungsteil ein Bodenführungselement zugeordnet sein.

Alternativ oder insbesondere zusätzlich zu einer Weitergabe eines Teils der Gewichtskraft über die o.g. Bodenführungselemente kann wenigstens ein Teil der Gewichtskraft vom Querförderrahmen aufgenommen werden. Dies muss selbstverständlich in einer Weise geschehen, die die Höhenbeweglichkeit der Aufnahmevorrichtung erlaubt. Gemäß einer solchen Ausgestaltung ist die Aufnahmevorrichtung über wenigstens ein Federelement mit dem Querförderrahmen verbunden, das dazu ausgebildet ist, eine wenigstens anteilig entlang der Schwader-Hochachse wirkende Zugkraft auszuüben. Bevorzugt können eine Mehrzahl solcher Federelement vorgesehen sein. Das jeweilige Federelement verbindet die Aufnahmevorrichtung mit dem Querförderrahmen und erzeugt eine Zugkraft, durch die Aufnahmevorrichtung entlastet wird. Entsprechend entsteht selbstverständlich eine zusätzliche Belastung des Querförderrahmens. Es versteht sich, dass die ausgeübte Zugkraft abhängig von der Position der Aufnahmevorrichtung relativ zur Querfördervorrichtung ist. Gleiches gilt somit auch für den relativen Anteil der Gewichtskraft, der durch das Federelement an den Querförderrahmen weitergegeben wird. Das Federelement kann als Teil der Aufnahme-Aufhängung angesehen werden. Es kann insbesondere als Linearfeder ausgebildet sein. Es könnte sich um eine mechanische Feder handeln, zum Beispiel eine Schraubenfeder. Insbesondere kann das Federelement als Hydraulikzylinder oder hydro-pneumatischer Zylinder ausgebildet sein. Bei einem solchen Zylinder lässt sich auch die Zugkraft durch Veränderung des Hydraulikdrucks anpassen.

Durch die Höhenbeweglichkeit der Aufnahmevorrichtung wird bei dem erfindungsgemäßen Schwader bereits eine hohe Anpassungsfähigkeit an ein sich veränderndes Bodenprofil erreicht. Aufgrund der typischen Breite der Schwadereinheit, welche entlang der Schwader-Querachse einige Meter betragen kann, ist allerdings damit zu rechnen, dass das Bodenprofil auch über die Breite der Schwadereinheit variiert. Um dieser Problematik zu begegnen, ist in einer vorteilhaften Weiterbildung der Erfindung vorgesehen, dass die Aufnahmevorrichtung zwei entlang der Schwader-Querachse zueinander versetzte Teileinheiten aufweist, die um eine sich wenigstens anteilig entlang der Schwader-Längsachse erstreckende Knickachse gegeneinander verkippbar sind, wobei die Teileinheiten wenigstens teilweise unabhängig voneinander gegenüber dem Querförderrahmen höhenbeweglich sind. Die beiden Teileinheiten sind körperlich getrennt, können aber bevorzugt kraftübertragend verbunden sein, um insbesondere eine Drehbewegung eines Rotors zu übertragen. Der jeweilige Rotor besteht in diesem Fall aus zwei Teilrotoren oder Rotorhälften, die über eine geeignete Kupplung miteinander verbunden sein können. Die Kupplung sollte einerseits eine Drehbewegung übertragen, andererseits aber auch einen sich verändernden Abstand überbrücken können, der beim Verkippen der Teileinheiten entsteht. Die beiden Teileinheiten sind relativ zueinander um eine Knickachse verkippbar. Die Knickachse kann parallel zur Schwader-Längsachse verlaufen oder im Winkel zu dieser, nicht jedoch senkrecht hierzu. Typischerweise beträgt der Winkel maximal 30°. Je nach Ausgestaltung der Verbindung der Teileinheiten ist die Kippachse gegebenenfalls nicht eindeutig definiert oder variabel. Es ist auch denkbar, dass ein Verkippen mit mehreren Freiheitsgraden möglich ist, also ein Verkippen um mehrere Kippachsen.

Durch das Verkippen können sich eine oder beide Seiten der Aufnahmevorrichtung absenken oder anheben, während die Mitte ihre Höhe beibehält, oder umgekehrt. Es ist auch denkbar, dass sich eine Seite und die Mitte absenken oder anheben, während die andere Seite ihre Höhe beibehält. Dies sind nur einige Beispiele. Sofern Bodenführungselemente vorgesehen sind, ist jeder Teileinheit wenigstens ein Bodenführungselement zugeordnet, wobei eine Teileinheit auch zwei solche Elemente aufweisen kann. Bevorzugt ist jeweils ein Bodenführungselement seitlich außen angeordnet und ein Bodenführungselement nahe der Mitte der Aufnahmevorrichtung. Ebenfalls bevorzugt ist jede Teileinheit über wenigstens eine ihr zugeordnete Aufhängungseinheit mit dem Querförderrahmen verbunden. Das heißt, jeder Teileinheit ist wenigstens eine Aufhängungseinheit der Aufnahme-Aufhängung zugeordnet. Die entsprechende Aufhängungseinheit verbindet diese Teileinheit mit dem Querförderrahmen. Eine der Teileinheiten kann über zwei Aufhängungseinheiten mit dem Querförderrahmen verbunden sein. Jede der Teileinheiten kann über eine Doppellenker-Aufhängung mit dem Querförderrahmen verbunden sein. Wenigstens eine Teileinheit kann über einen Querführungslenker angebunden sein. Sofern die Teileinheiten derart verbunden sind, dass zwischen ihnen Querkräfte übertragen werden, ist es ausreichend, bei genau einer Teileinheit einen Querführungslenker vorzusehen. Eine mögliche Konfiguration sieht vor, dass jede Teileinheit außenseitig eine Doppellenker-Aufhängung aufweist, während eine der Teileinheiten nahe der Mitte der Aufnahmevorrichtung über einen einzelnen Querführungslenker mit dem Querförderrahmen verbunden ist.

Eine Ausgestaltung sieht vor, dass der Querförderrahmen wenigstens indirekt mit dem Hauptrahmen verbunden ist über einen Mittellenker sowie zwei entlang der Schwader-Querachse seitlich hierzu versetzte und entlang der Schwader-Hochachse wenigstens teilweise hierzu vertikal versetzte Seitenlenker, wobei der Mittellenker und die Seitenlenker unabhängig voneinander beiderseits schwenkbar angebunden sind und wobei jeder Seitenlenker aktorisch schwenkbar ist. Die genannten Lenker sind entweder direkt mit dem Hauptrahmen verbunden oder mit einem mit diesem verbundenen, zwischengeordneten Bauteil. Jeder der Lenker ist unabhängig von den anderen beiden Lenkern schwenkbar mit dem Querförderrahmen verbunden sowie mit dem Hauptrahmen oder dem zwischengeordneten Bauteil. Die Seitenlenker sind beiderseits des Mittellenkers angeordnet und wenigstens teilweise bezüglich der Hochachse hierzu versetzt. Sie sind also entweder wenigstens teilweise oberhalb des Mittellenkers angeordnet oder wenigstens teilweise unterhalb. In letzterem Fall kann der Mittellenker als Oberlenker bezeichnet werden und die Seitenlenker als Unterlenker. Je nach Ausgestaltung sind diese Unterlenker zumindest in der Arbeitskonfiguration vollständig unterhalb des Oberlenkers angeordnet. Entsprechend ist auch eine Ausgestaltung denkbar, in welcher die Seitenlenker vollständig oberhalb des Mittellenkers angeordnet sind. Der Querförderrahmen kann einen sich aufwärts oder aber abwärts ersteckenden Halteabschnitt aufweisen, an dem der Mittellenker ansetzt. Sofern die Seitenlenker als Unterlenker ausgebildet sind, können sie unterseitig des Querförderrahmens ansetzen. Der Mittellenker ist bevorzugt aktorisch längenverstellbar, wobei er einen Linearaktor aufweisen kann, zum Beispiel einen Hydraulikzylinder. Der entsprechende Aktor wird hier als Mittellenker-Aktor oder Oberlenker-Aktor, insbesondere Mittellenker-Zylinder oder Oberlenker-Zylinder, bezeichnet. Die Seitenlenker sind aktorisch schwenkbar, wozu jeweils ein Linearaktor an einem Seitenlenker sowie auf Seiten des Hauptrahmens ansetzen kann. Auch diese Linearaktoren können als Hydraulikzylinder ausgebildet sein. Sie werden nachfolgend als Seitenlenker-Aktoren oder Unterlenker-Aktoren oder speziell als Seitenlenker-Zylinder oder Unterlenker-Zylinder bezeichnet. Der Mittellenker-Aktor kann für eine Feineinstellung einer Arbeitshöhe der Aufnahmevorrichtung genutzt werden und/oder zum Ausheben der Schwadereinheit in einem Vorgewende. Die Seitenlenker-Aktoren können ebenfalls zum Ausheben genutzt werden. Außerdem kann durch sie eingestellt werden, wie viel der Gewichtskraft der Aufnahmevorrichtung vom Querförderrahmen aufgenommen wird, also wie stark die Aufnahmevorrichtung entlastet wird. Hierzu kann allerdings auch ein separates Bauteil, zum Beispiel ein Federelement, eingesetzt werden. Neben einer aktiven Verstellung des Querförderrahmens können die Seitenlenker-Aktoren, wenn sie zum Beispiel als Hydraulikzylinder ausgebildet sind, auch als passive Federelemente wirken, die der Querfördervorrichtung ermöglichen, unterschiedliche Höhenpositionen einzunehmen, zum Beispiel wenn die Aufnahmevorrichtung eine Anschlagposition erreicht hat und sich die Querfördervorrichtung mit bewegen muss. Auch können sie der Querfördervorrichtung sowie der gesamten Schwadereinheit ein Querpendeln ermöglichen.

Eine Ausgestaltung sieht vor, dass der Mittellenker und die Seitenlenker mit einem Aufhängungsrahmen verbunden sind, der aktorisch um eine wenigstens anteilig entlang der Schwader-Querachse verlaufende Transport-Schwenkachse gegenüber dem Hauptrahmen schwenkbar ist. Der Aufhängungsrahmen ist wenigstens indirekt mit dem Hauptrahmen verbunden. Er bildet eine in sich starre Struktur, an welcher der Mittellenker und die Seitenlenker ansetzen. Allerdings ist er nicht starr mit dem Hauptrahmen verbunden, sondern kann um die genannte Transport-Schwenkachse geschwenkt werden. Hierzu können ein oder mehrere Aktoren, insbesondere Linearaktoren wie Hydraulikzylinder, dienen. Die Transport-Schwenkachse verläuft bevorzugt horizontal, weiter bevorzugt parallel zur Schwader-Querachse. Durch Schwenken um die Transport-Schwenkachse kann die Schwadereinheit einschließlich des Aufhängungsrahmens beispielsweise in eine Transportposition für eine Straßenfahrt überführt werden.

Bevorzugt weist der Hauptrahmen zwei Seitenausleger aufweist, wobei jeweils eine Schwadereinheit wenigstens indirekt mit einem Seitenausleger verbunden ist. Das heißt, in diesem Fall sind zwei Schwadereinheiten vorgesehen, die insbesondere identisch oder spiegelsymmetrisch ausgebildet sein können. Jede Schwadereinheit kann die o.g. erfindungsgemäßen und/oder optionalen Merkmale aufweisen. Der Hauptrahmen weist Seitenausleger auf, die normalerweise langgestreckt sind. In der Arbeitskonfiguration erstrecken sich die Seitenausleger entlang der Schwader-Querachse beiderseits des Hauptrahmens. Sie sind ausreichend stabil ausgebildet, um wenigstens einen Teil der Gewichtskraft der jeweiligen Schwadereinheit aufzunehmen, so dass dieser in den Hauptrahmen eingeleitet und über das Fahrwerk an den Boden weitergeleitet wird. Ein o.g. Aufhängungsrahmen kann mit dem Seitenausleger verbunden sein. Die Schwadereinheit kann entlang des Seitenauslegers entlang der Schwader-Querachse verstellbar sein, zum Beispiel um unterschiedliche Abstände der Schwadereinheiten zu realisieren, was für unterschiedliche Ablagemodi genutzt werden kann, zum Beispiel Mittenablage, Seitenablage oder separate Ablage von jeder einzelnen Schwadereinheit. Die Seitenausleger können ihrerseits verstellbar mit dem Hauptrahmen verbunden sein.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Ansicht eines erfindungsgemäßen Schwaders;

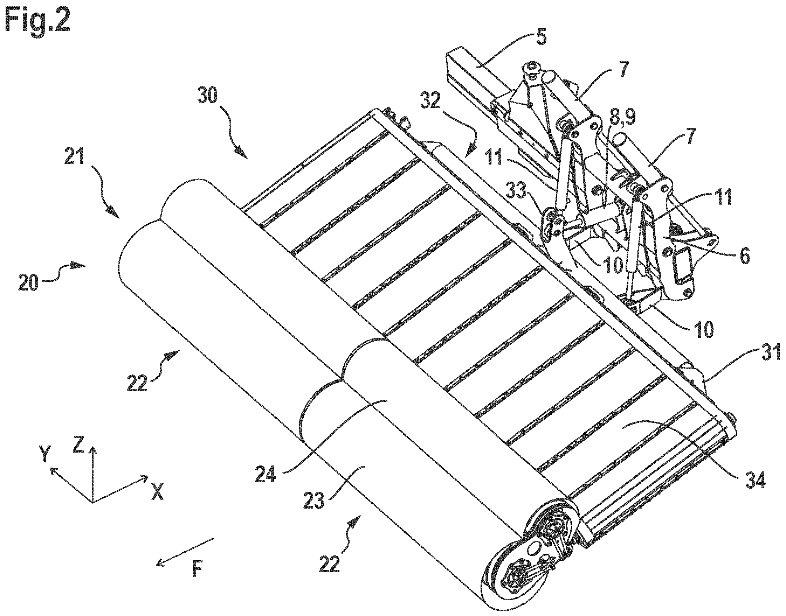

- Fig. 2: eine perspektivische Ansicht eines seitlichen Teils des Schwaders aus Fig. 1;

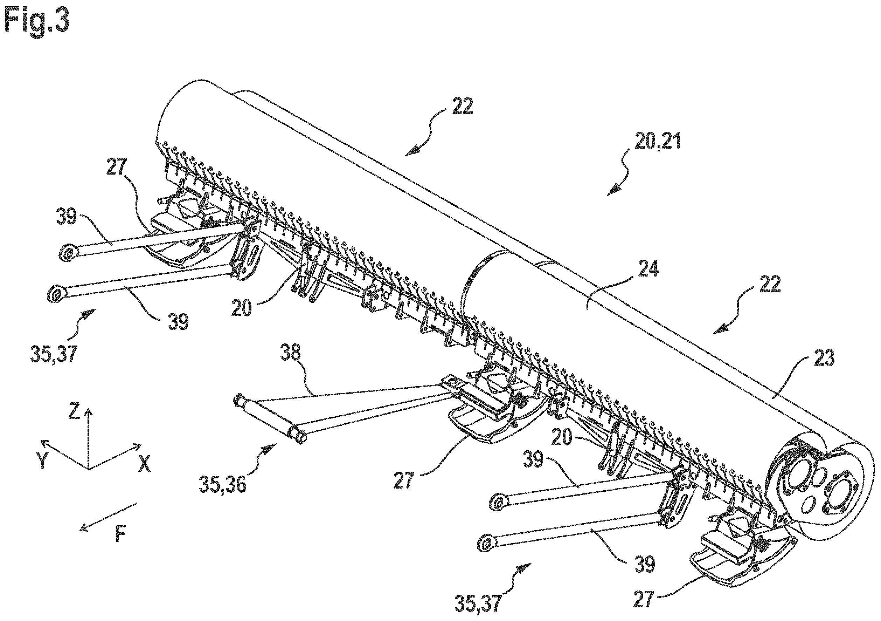

- Fig. 3: eine perspektivische Ansicht von Teilen einer Schwadereinheit des Schwaders aus Fig.1;

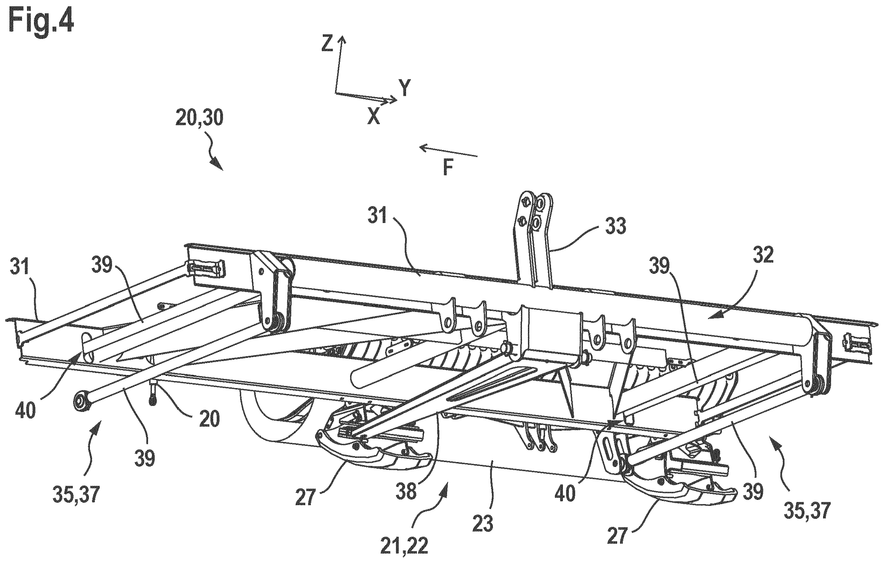

- Fig. 4: eine weitere perspektivische Ansicht von Teilen der Schwadereinheit aus Fig.3;
- Fig. 5A, 5B: Seitenansichten des in Fig.2 gezeigten seitlichen Teils des Schwaders mit der Schwadereinheit in unterschiedlichen Höhenpositionen;
- Fig. 6: eine seitliche Darstellung des seitlichen Teils des Schwaders mit der Schwadereinheit in einer Pendelstellung; sowie
- Fig. 7: eine Vorderansicht des seitlichen Teils mit der Schwadereinheit in der Pendelstellung.

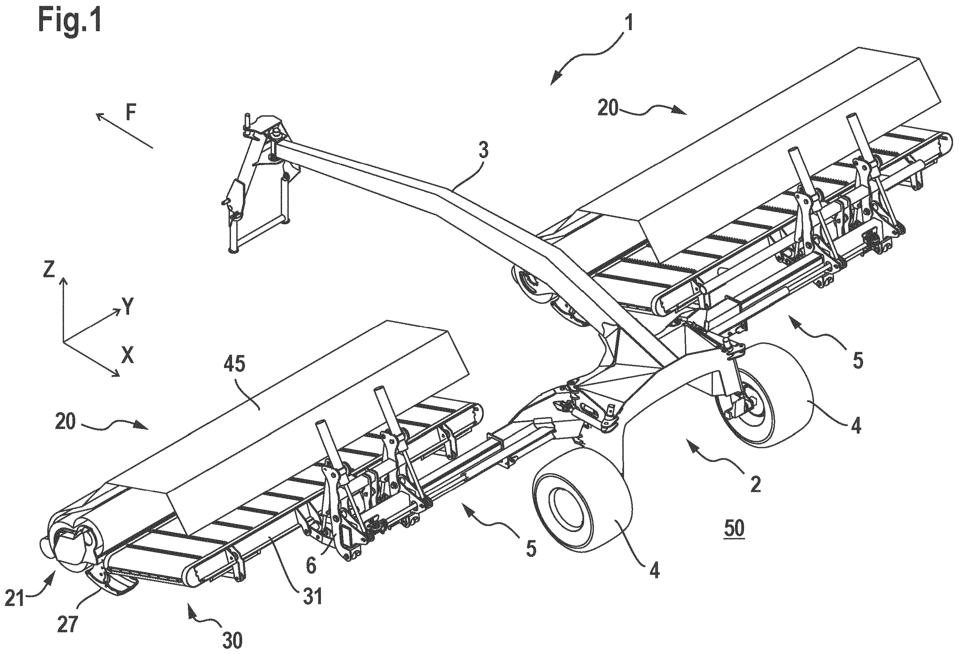

Fig. 1 zeigt einen erfindungsgemäßen Schwader 1, der dazu vorgesehen ist, von einem hier nicht dargestellten Schlepper gezogen zu werden. Der Schwader 1 weist einen Hauptrahmen 2 auf, der über zwei Räder eines Fahrwerks 4 an einem Boden 50 abstützbar ist. Außerdem weist der Hauptrahmen 2 eine in einer Fahrtrichtung F nach vorne weisende, sich entlang einer Schwader-Längsachse X erstreckende Deichsel 3 auf, über welche er an den Schlepper angekoppelt wird. Parallel zu einer Schwader-Querachse Y erstrecken sich beiderseits des Hauptrahmens 2 zwei Seitenausleger 5, an denen jeweils eine Schwadereinheit 20 angeordnet ist. Die beiden Schwadereinheiten 20 sowie ihre Verbindung mit dem Hauptrahmen 2 sind identisch beziehungsweise spiegelsymmetrisch, weshalb nachfolgend nur jeweils eine Schwadereinheit 20 betrachtet wird.

Die Schwadereinheit 20 weist eine Aufnahmevorrichtung 21 auf sowie eine bezüglich der Schwader-Längsachse X dahinter angeordnete Querfördervorrichtung 30. Letztere weist ein Förderband 34 auf, weshalb der Schader 1 auch als Bandschwader bezeichnet werden kann. Wenn der Schwader 1 in Fahrtrichtung F gezogen wird, nimmt die Aufnahmevorrichtung 21 Erntegut vom Boden 50 auf und übergibt es an die Querfördervorrichtung 30. Hierzu weist die Aufnahmevorrichtung 21 einen drehend antreibbaren Aufnahmerotor 23 auf, der dicht über dem Boden 50 entlang geführt wird, sowie einen ebenfalls drehend antreibbaren Übergaberotor 24, der bezüglich der Schwader-Längsachse X nach hinten sowie bezüglich einer Schwader-Hochachse Z nach oben gegenüber dem Aufnahmerotor 23 versetzt ist. Beide Rotoren 23, 24 weisen eine Mehrzahl von Zinken auf, welche in den Figuren aus Gründen der Übersichtlichkeit nicht dargestellt sind. Stattdessen sind jeweils die zylindrischen Hüllflächen der Bewegungsbereiche der jeweiligen Zinken dargestellt.

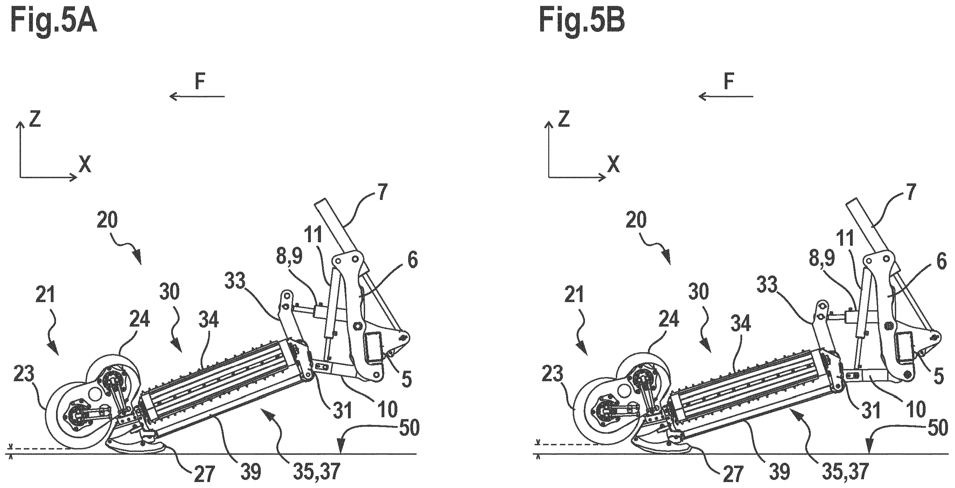

Wie insbesondere in den Seitenansichten in Fig. 5A und 5B erkennbar ist, erstreckt sich die Aufnahmevorrichtung 21 mit dem Übergaberotor 24 bezüglich der Schwader-Hochachse Z deutlich höher als das Förderband 34 der Querfördervorrichtung 30, so dass das Erntegut von oben auf das Förderband 34 abgeworfen werden kann. Das Förderband 34 wiederum fördert das Erntegut entlang der Schwader-Querachse Y seitwärts entweder nach außen oder nach innen, wo es schwadweise abgelegt wird. Um einen Verlust von Erntegut zu verhindern und insgesamt die Führung des Erntegutes auf dem Weg zum Förderband 34 zu verbessern, ist für jede Schwadereinheit 20 ein Niederhalter 45 vorgesehen, der aus Gründen der Übersichtlichkeit in Fig. 1 nur teilweise dargestellt und in den weiteren Figuren vollständig weggelassen ist.

Fig. 1 zeigt eine Arbeitskonfiguration des Schwaders 1, die für eine Ablage des Erntegutes nach innen, also zur Mittelebene des Schwaders 1, vorgesehen ist. Dabei sind die beiden Schwadereinheiten 20 entlang der Schwader-Querachse Y deutlich beabstandet und die Förderbänder 34 werden so betrieben, dass sie das Erntegut jeweils zur Mitte hin fördern. In einer alternativen, hier nicht dargestellten Arbeitskonfiguration können die Schwadereinheit 20 an den Seitenauslegern 5 zur Mitte hin verstellt werden, so dass sie unmittelbar benachbart zueinander angeordnet sind. Die Förderbänder 34 können in diesem Fall gleichlaufend betrieben werden, so dass das Erntegut zu einer Seite hin abgelegt wird.

Die Querfördervorrichtung 30 weist einen Querförderrahmen 31 auf, der ihr strukturelle Stabilität verleiht und an dem das umlaufend bewegliche Förderband 34 gelagert ist. Mit dem Querförderrahmen 31 ist eine Aufnahme-Aufhängung 35 verbunden, welche die Aufnahmevorrichtung 21 beweglich mit der Querfördervorrichtung 30 verbindet. Insbesondere ist die Aufnahmevorrichtung 21 aufgrund der nachfolgend geschilderten Ausgestaltung der Aufnahme-Aufhängung 35 sowohl gegenüber dem Querförderrahmen 31 als auch gegenüber dem Hauptrahmen 2 höhenbeweglich. Dementsprechend kann die Aufnahmevorrichtung mittels Bodenführungselementen 27, welche hier als Kufen ausgebildet sind, ein Profil des Bodens 50 abtasten und zumindest kleineren Unebenheiten folgen, ohne dass hierfür die Querfördervorrichtung 30 ihre Höhenposition verändern muss. Im vorliegenden Fall weist die Aufnahme-Aufhängung 35 drei entlang der Schwader-Querachse Y beabstandete Aufhängungseinheiten 36, 37 auf. Die Aufnahmevorrichtung 21 weist zwei entlang der Schwader-Querachse Y zueinander versetzte Teileinheiten 22 auf, die um eine sich wenigstens anteilig entlang der Schwader-Längsachse X erstreckende Knickachse K gegeneinander verkippbar sind. Entsprechend sind auch die beiden Rotoren 23, 24 zweigeteilt, wobei die jeweiligen Rotorhälften über eine geeignete (nicht dargestellte) Kupplung drehungsübertragend aneinander gekoppelt sind.

Einer der Teileinheiten 22, in diesem Fall der in Fahrtrichtung gesehen linken Teileinheit 22, sind zwei Bodenführungselemente 27 sowie zwei Aufhängungseinheiten 36, 37 zugeordnet. Dabei ist eine seitliche Aufhängungseinheit 37 als Parallelogramm-Aufhängung ausgebildet mit zwei parallel geführten Aufhängungslenkern 39, die schwenkbar mit einem hinteren Bereich 32 des Querförderrahmen 31 sowie mit der Aufnahmevorrichtung 21 verbunden sind. Eine mittlere Aufhängungseinheit 36 weist einen einzelnen Aufhängungslenker 38 auf, der ebenfalls schwenkbar mit dem hinteren Bereich 32 sowie mit der Aufnahmevorrichtung 21 verbunden ist. Der anderen, bezüglich der Fahrtrichtung F rechten, Teileinheit 22 ist in diesem Fall lediglich eine seitliche Aufhängungseinheit 37 zugeordnet, die wiederum als Parallelogramm-Aufhängung mit zwei parallelen Aufhängungslenkern 39 ausgebildet ist. Durch Schwenken der Aufhängungslenker 38, 39 kann die Aufnahmevorrichtung 21 ihre Höhe gegenüber dem Querförderrahmen 31 verändern, wobei gleichzeitig eine geringfügige Verschiebung entlang der Schwader-Längsachse X erfolgt, die allerdings vernachlässigbar ist. Da jeder Teileinheit 22 eine Parallelogramm-Aufhängung zugeordnet ist, behält sie bei einer Relativbewegung gegenüber dem Querförderrahmen 31 stets die gleiche Orientierung um die Schwader-Querachse Y. Der mittlere Aufhängungslenker 38 ist mit dem Querförderrahmen 31 über ein Schwenklager mit nur einem Freiheitsgrad verbunden. Dieses lässt nur eine Schwenkbewegung um die Schwader-Querachse Y zu. Entsprechend kann dieser Aufhängungslenker 38 als Querführungslenker Kräfte aufnehmen, die entlang der Schwader-Querachse Y zwischen der Aufnahmevorrichtung 21 und dem Querförderrahmen 31 wirken.

Während der mittlere Aufhängungslenker 38 in diesem Beispiel unterhalb der Querfördervorrichtung 30 verläuft und gewissermaßen frei beweglich ist, verläuft der jeweils obere der seitlichen Aufhängungslenker 39 innerhalb der Querfördervorrichtung 30 und ist durch ein Langloch 40 innerhalb des Querförderrahmens 31 geführt. Das Langloch 40 erstreckt sich entlang der Schwader-Hochachse Z und definiert aufgrund seiner endlichen Ausdehnung durch seine Enden eine obere Anschlagposition sowie eine untere Anschlagposition, zwischen denen sich die Aufnahmevorrichtung 21, oder genauer gesagt, die jeweilige Teileinheit 22, gegenüber dem Querförderrahmen 31 bewegen kann. Solange keine der Anschlagpositionen erreicht wird, wird die Bewegung der Aufnahmevorrichtung 21 zum einen durch ihre eigene Gewichtskraft beeinflusst sowie zum anderen durch die über die Bodenführungselemente 27 einwirkende Kraft seitens des Bodens 50. Zusätzlich wird allerdings ein Teil der Gewichtskraft über Federelemente 28, die vorliegend als Hydraulikzylinder ausgebildet sind, an den Querförderrahmen 31 weitergegeben. Die Federelemente 28 können somit auch als Entlastungselemente bezeichnet werden. Wird eine der Anschlagpositionen erreicht, koppelt die Aufnahmevorrichtung 21 über einen Formschluss an den Querförderrahmen 31, so dass sich beide nur noch gemeinsam in die entsprechende Richtung bewegen können. Dies geschieht über die Aufhängung der Querfördervorrichtung 30, welche nachfolgend geschildert wird.

Der Querförderrahmen 31 ist über einen als Oberlenker-Zylinder 9 ausgebildeten Oberlenker 8 (welcher einen Mittellenker bildet) sowie zwei entlang der Schwader-Querachse Y seitlich hierzu versetzte und bezüglich der Schwader-Hochachse Z darunter angeordnete Unterlenker 10 (welche Seitenlenker bilden) mit einem Aufhängungsrahmen 6 verbunden. Der hier als Hydraulikzylinder ausgebildete Oberlenker-Zylinder 9 ist längenverstellbar und über Schwenklager (ohne Bezugszeichen) einerseits mit dem Aufhängungsrahmen 6 sowie andererseits mit einem Höhenausleger 33 des Querförderrahmen 31 verbunden. Die Unterlenker 10 sind ebenfalls über Schwenklager mit dem Querförderrahmen 31 sowie dem Aufhängungsrahmen 6 verbunden. An jedem Unterlenker 10 setzt ein ebenfalls als Hydraulikzylinder ausgebildeter Unterlenker-Zylinder 11 an, der mit dem Unterlenker 10 sowie mit dem Aufhängungsrahmen 6 schwenkbar verbunden ist. Der Aufhängungsrahmen 6 ist seinerseits um eine Transport-Schwenkachse T schwenkbar mit dem Seitenausleger 5 verbunden und kann mittels zweier-Zylinder 7 in eine hier nicht dargestellte Transportposition aufwärts geschwenkt werden.

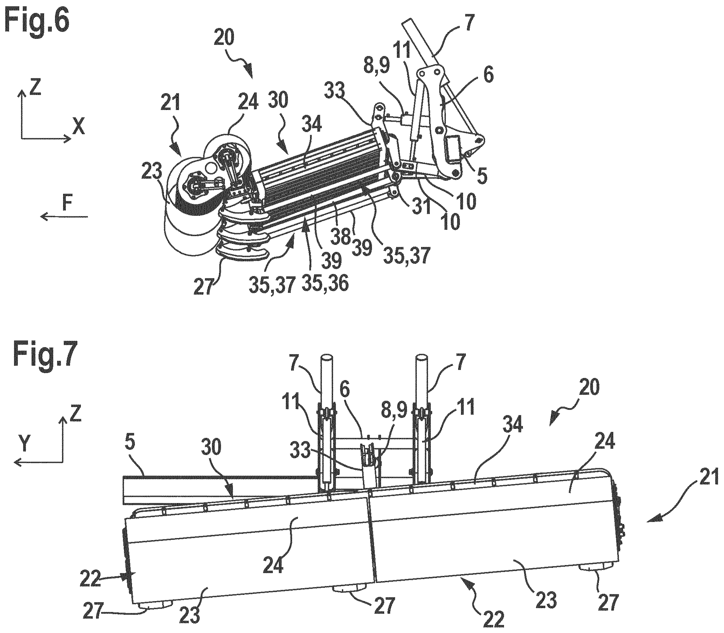

Durch Längenverstellung des Oberlenkers 8 ist es möglich, die Schwadereinheit 20 zum Beispiel in einem Vorgewende auszuheben. Außerdem kann hierüber eine Feineinstellung einer Arbeitshöhe H der Aufnahmevorrichtung 21 vorgenommen werden, wie in Fig. 5A und 5B dargestellt ist. Fig. 5A zeigt einen Zustand, in dem der Oberlenker-Zylinder 9 relativ weit ausgefahren ist, wodurch die gesamte Schwadereinheit 20 so verschwenkt wird, dass sich eine vergleichsweise geringe Arbeitshöhe, also ein geringer Abstand zwischen dem Aufnahmerotor 23 und dem Boden 50, ergibt. Fig. 5B zeigt hingegen einen Zustand, in welchem der Oberlenker-Zylinder 8 weiter eingefahren ist, wodurch die gesamte Schwadereinheit so verschwenkt ist, dass sich eine größere Arbeitshöhe H ergibt. Über die Unterlenker-Zylinder 11 kann das Ausheben im Vorgewende zumindest unterstützt werden. Außerdem wirken die Unterlenker-Zylinder 11 als Federelemente, die einen Teil der Gewichtskraft der Schwadereinheit 20 über den Aufhängungsrahmen 6 an den Hauptrahmen 2 weitergeben. Durch ihre passive Auslenkung kann die Schwadereinheit 20 insgesamt aufwärts oder abwärts ausgelenkt werden, zum Beispiel wenn die Aufnahmevorrichtung 21 eine der Anschlagposition erreicht hat. Durch eine unterschiedliche, also asymmetrische Auslenkung der beiden Unterlenker 10 und eine hiervon begleiteten unterschiedlichen Kompression beziehungsweise Expansion der Unterlenker-Zylinder 11 kann die Schwadereinheit 20 auch ein Querpendeln ausführen, welches in Fig. 6 und 7 dargestellt ist.

## Patentansprüche

1. Schwader (1), mit einem Hauptrahmen (2), der im Betriebszustand über ein Fahrwerk (4) abstützbar ist, sowie mit wenigstens einer wenigstens indirekt mit dem Hauptrahmen (2) verbundenen Schwadereinheit (20), die eine Aufnahmevorrichtung (21) aufweist sowie eine in einer Arbeitskonfiguration des Schwaders (1) bezüglich einer Schwader-Längsachse (X) wenigstens überwiegend dahinter angeordnete Querfördervorrichtung (30) mit einem Querförderrahmen (31), wobei die Aufnahmevorrichtung (21) dazu eingerichtet ist, in der Arbeitskonfiguration landwirtschaftliches Erntegut vom Boden (50) aufzunehmen und an die Querfördervorrichtung (30) zu übergeben, und die Querfördervorrichtung (30) dazu eingerichtet ist, das übergebene Erntegut entlang einer Schwader-Querachse (Y) zu fördern und schwadweise auf dem Boden (50) abzulegen, wobei die Aufnahmevorrichtung (21) sowohl gegenüber dem Querförderrahmen (31) als auch gegenüber dem Hauptrahmen (2) wenigstens bezüglich einer Schwader-Hochachse (Z) höhenbeweglich ist und die Aufnahmevorrichtung (21) über eine Aufnahme-Aufhängung (35) höhenbeweglich mit dem Querförderrahmen (31) verbunden ist, wobei die Aufnahme-Aufhängung (35) eine Mehrzahl von entlang der Schwader-Querachse (Y) beabstandeten Aufhängungseinheiten (36, 37) aufweist,
**dadurch gekennzeichnet, dass**
wenigstens eine Aufhängungseinheit (36, 37) eine Doppellenker-Aufhängung aufweist.

2. Schwader nach Anspruch 1, **dadurch gekennzeichnet, dass** die Aufnahme-Aufhängung (35) wenigstens teilweise unterhalb und/oder wenigstens teilweise innerhalb der Querfördervorrichtung (30) angeordnet ist.

3. Schwader nach einem der vorangehenden Ansprüche, **dadurch gekennzeichnet, dass** wenigstens eine Aufhängungseinheit (36, 37) einen Aufhängungslenker (38, 39) aufweist, der sich von einem bezüglich der Schwader-Längsachse (X) hinteren Bereich (32) des Querförderrahmens (31) nach vorne zur Aufnahmevorrichtung (21) erstreckt.

4. Schwader nach einem der vorangehenden Ansprüche, **dadurch gekennzeichnet, dass** wenigstens eine Aufhängungseinheit (36, 37) eine Parallelogramm-Aufhängung, aufweist.

5. Schwader nach einem der vorangehenden Ansprüche, **dadurch gekennzeichnet, dass** die Aufnahmevorrichtung (21) dazu eingerichtet ist, das Erntegut bezüglich der Schwader-Hochachse (Z) oberhalb der Querfördervorrichtung (30) abzugeben und auf diese abzuwerfen.

6. Schwader nach einem der vorangehenden Ansprüche, **dadurch gekennzeichnet, dass** die Aufnahmevorrichtung (21) relativ zum Querförderrahmen (31) bis in eine Anschlagposition auslenkbar ist, bei deren Erreichen die Aufnahmevorrichtung (21) über einen entlang der Schwader-Hochachse (Z) wirkenden Formschluss mit dem Querförderrahmen (31) zusammenwirkt.

7. Schwader nach einem der vorangehenden Ansprüche, **dadurch gekennzeichnet, dass** eine Anschlagposition durch ein Ende einer sich entlang der Schwader-Hochachse (Z) erstreckenden, wenigstens einseitig geschlossenen Ausnehmung (40) definiert ist, in welche ein Anschlagteil eingreift, welches bei einer Auslenkung der Aufnahmevorrichtung (21) entlang der Schwader-Hochachse (Z) relativ zur Ausnehmung (40) auslenkbar ist.

8. Schwader nach einem der vorangehenden Ansprüche, **dadurch gekennzeichnet, dass** die Aufnahmevorrichtung (21) Bodenführungselemente (27) aufweist, über welche sie wenigstens anteilig bodenseitig abstützbar ist.

9. Schwader nach einem der vorangehenden Ansprüche, **dadurch gekennzeichnet, dass** die Aufnahmevorrichtung (21) über wenigstens ein Federelement (28) mit dem Querförderrahmen (31) verbunden ist, das dazu ausgebildet ist, eine wenigstens anteilig entlang der Schwader-Hochachse (Z) wirkende Zugkraft auszuüben.

10. Schwader nach einem der vorangehenden Ansprüche, **dadurch gekennzeichnet, dass** die Aufnahmevorrichtung (21) zwei entlang der Schwader-Querachse (Y) zueinander versetzte Teileinheiten (22) aufweist, die um eine sich wenigstens anteilig entlang der Schwader-Längsachse (X) erstreckende Knickachse (K) gegeneinander verkippbar sind, wobei die Teileinheiten (22) wenigstens teilweise unabhängig voneinander gegenüber dem Querförderrahmen (31) höhenbeweglich sind.

11. Schwader nach einem der vorangehenden Ansprüche, **dadurch gekennzeichnet, dass** der Querförderrahmen (31) wenigstens indirekt mit dem Hauptrahmen (2) verbunden ist über einen Mittellenker (8) sowie zwei entlang der Schwader-Querachse (Y) seitlich hierzu versetzte und entlang der Schwader-Hochachse (Z) wenigstens teilweise hierzu vertikal versetzte Seitenlenker (10), wobei der Mittellenker (8) und die Seitenlenker (10) unabhängig voneinander beiderseits schwenkbar angebunden sind und wobei jeder Seitenlenker (10) aktorisch schwenkbar ist.

12. Schwader nach Anspruch 11, **dadurch gekennzeichnet, dass** der Mittellenker (8) und die Seitenlenker (10) mit einem Aufhängungsrahmen (6) verbunden sind, der aktorisch um eine wenigstens anteilig entlang der Schwader-Querachse (Y) verlaufende Transport-Schwenkachse (T) gegenüber dem Hauptrahmen (2) schwenkbar ist.

13. Schwader nach einem der vorangehenden Ansprüche, **dadurch gekennzeichnet, dass** der Hauptrahmen (2) zwei Seitenausleger (5) aufweist, wobei jeweils eine Schwadereinheit (20) wenigstens indirekt mit einem Seitenausleger (5) verbunden ist.

## Claims

1. Swather (1) comprising a main frame (2) which, in the operating state, can be supported by an undercarriage (4), and comprising at least one swather unit (20) which is connected at least indirectly to the main frame (2) and has a pickup device (21) and a transverse conveying device (30) which is arranged at least predominantly behind the pickup device with respect to a longitudinal axis (X) of the swather in a working configuration of the swather (1) and has a transverse conveying frame (31), the pickup device (21) being configured, in the working configuration, to pick up agricultural crop material from the ground (50) and to transfer it to the transverse conveying device (30), and the transverse conveying device (30) being configured to convey the transferred crop material along a transverse axis (Y) of the swather and deposit it in swaths on the ground (50), the pickup device (21) being vertically movable both relative to the transverse conveying frame (31) and relative to the main frame (2) at least with respect to a vertical axis (Z) of the swather and the pickup device (21) being connected in a vertically-movable manner to the transverse conveying frame (31) via a pickup suspension (35), the pickup suspension (35) having a plurality of suspension units (36, 37) spaced apart along the transverse axis (Y) of the swather,
**characterized in that**
at least one suspension unit (36, 37) has a double-link suspension.

2. Swather according to claim 1, **characterized in that** the pickup suspension (35) is arranged at least in part below and/or at least in part within the transverse conveying device (30).

3. Swather according to either of the preceding claims, **characterized in that** at least one suspension unit (36, 37) has a suspension link (38, 39) which extends forward to the pickup device (21) from a region (32) of the transverse conveying frame (31) which is at the rear with respect to the longitudinal axis (X) of the swather.

4. Swather according to any of the preceding claims, **characterized in that** at least one suspension unit (36, 37) has a parallelogram suspension.

5. Swather according to any of the preceding claims, **characterized in that** the pickup device (21) is configured to discharge the crop material above the transverse conveying device (30) with respect to the vertical axis (Z) of the swather and to throw it onto the transverse conveying device.

6. Swather according to any of the preceding claims, **characterized in that** the pickup device (21) can be deflected relative to the transverse conveying frame (31) as far as a stop position, upon reaching which the pickup device (21) interacts with the transverse conveying frame (31) via a form fit acting along the vertical axis (Z) of the swather.

7. Swather according to any of the preceding claims, **characterized in that** a stop position is defined by one end of a recess (40) which extends along the vertical axis (Z) of the swather, is closed at least on one side, and into which a stop part engages, which part can be deflected relative to the recess (40) when the pickup device (21) is deflected along the vertical axis (Z) of the swather.

8. Swather according to any of the preceding claims, **characterized in that** the pickup device (21) has ground guide elements (27) via which it can be supported at least proportionately on the ground.

9. Swather according to any of the preceding claims, **characterized in that** the pickup device (21) is connected to the transverse conveying frame (31) by at least one spring element (28) which is designed to exert a tensile force acting at least proportionately along the vertical axis (Z) of the swather.

10. Swather according to any of the preceding claims, **characterized in that** the pickup device (21) has two sub-units (22) which are offset with respect to one another along the transverse axis (Y) of the swather and can be tilted relative to one another about a bending axis (K) extending at least proportionately along the longitudinal axis (X) of the swather, the sub-units (22) being vertically movable relative to the transverse conveying frame (31), at least partially independently of one another.

11. Swather according to any of the preceding claims, **characterized in that** the transverse conveying frame (31) is connected at least indirectly to the main frame (2) via a central link (8) and two lateral links (10) which are offset laterally along the transverse axis (Y) of the swather with respect to said central link and are at least partially vertically offset with respect thereto along the vertical axis (Z) of the swather, the central link (8) and the lateral links (10) being pivotably attached on both sides independently of one another and each lateral link (10) being pivotable by an actuator.

12. Swather according to claim 11, **characterized in that** the central link (8) and the lateral links (10) are connected to a suspension frame (6) which is pivotable by an actuator relative to the main frame (2) about a transport pivot axis (T) running at least proportionately along the transverse axis (Y) of the swather.

13. Swather according to any of the preceding claims, **characterized in that** the main frame (2) has two side arms (5), a swather unit (20) being connected at least indirectly to each side arm (5).

## Revendications

1. Andaineur (1), comportant un châssis principal (2) pouvant s'appuyer, en état de fonctionnement, sur un mécanisme de roulement (4), et comportant au moins une unité d'andainage (20) reliée au moins indirectement au châssis principal (2), laquelle présente un dispositif de réception (21) ainsi qu'un dispositif d'acheminement transversal (30) disposé, dans une configuration de travail de l'andaineur (1), au moins principalement en arrière de celui-ci par rapport à un axe longitudinal d'andaineur (X) et comportant un châssis d'acheminement transversal (31), dans lequel le dispositif de réception (21) est conçu pour, dans la configuration de travail, recevoir la récolte agricole provenant du sol (50) et la transférer au dispositif d'acheminement transversal (30), et le dispositif d'acheminement transversal (30) est conçu pour acheminer la récole transférée le long d'un axe transversal d'andaineur (Y) et pour les déposer en andains sur le sol (50), dans lequel le dispositif de réception (21) est mobile en hauteur tant par rapport au châssis d'acheminement transversal (31) que par rapport au châssis principal (2), au moins selon un axe vertical d'andaineur (Z), et le dispositif de réception (21) est relié au châssis d'acheminement transversal (31) de manière à être mobile en hauteur par l'intermédiaire d'une suspension de réception (35), dans lequel la suspension de réception (35) présente une pluralité d'unités de suspension (36, 37) espacées le long de l'axe transversal d'andaineur (Y), **caractérisé en ce que**
au moins une unité de suspension (36, 37) présente une suspension à double bras.

2. Andaineur selon la revendication 1, **caractérisé en ce que** la suspension de réception (35) est disposée au moins en partie en dessous et/ou au moins en partie à l'intérieur du dispositif d'acheminement transversal (30).

3. Andaineur selon l'une des revendications précédentes,
**caractérisé en ce qu'**au moins une unité de suspension (36, 37) présente un bras de suspension (38, 39) qui s'étend depuis une zone arrière (32), par rapport à l'axe longitudinal d'andaineur (X), du châssis d'acheminement transversal (31) vers l'avant en direction du dispositif de réception (21).

4. Andaineur selon l'une des revendications précédentes,
**caractérisé en ce qu'**au moins une unité de suspension (36, 37) présente une suspension à parallélogramme.

5. Andaineur selon l'une des revendications précédentes,
**caractérisé en ce que** le dispositif de réception (21) est conçu pour déverser la récolte, par rapport à l'axe vertical d'andaineur (Z), au-dessus du dispositif d'acheminement transversal (30) et pour la projeter sur celui-ci.

6. Andaineur selon l'une des revendications précédentes,
**caractérisé en ce que** le dispositif de réception (21) peut être dévié jusqu'à une position de butée par rapport au châssis d'acheminement transversal (31), lorsque celle-ci est atteinte, le dispositif de réception (21) coopère avec le châssis d'acheminement transversal (31) par l'intermédiaire d'une complémentarité de forme agissant le long de l'axe vertical d'andaineur (Z).

7. Andaineur selon l'une des revendications précédentes,
**caractérisé en ce qu'**une position de butée est définie par une extrémité d'un évidement (40) au moins fermé d'un côté, s'étendant le long de l'axe vertical d'andaineur (Z) et dans lequel une partie de butée vient en prise, laquelle, lors d'une déviation du dispositif de réception (21), peut être déviée par rapport à l'évidement (40) le long de l'axe vertical d'andaineur (Z).

8. Andaineur selon l'une des revendications précédentes,
**caractérisé en ce que** le dispositif de réception (21) présente des éléments de guidage au sol (27) par l'intermédiaire desquels il peut s'appuyer, au moins en partie, sur le sol.

9. Andaineur selon l'une des revendications précédentes,
**caractérisé en ce que** le dispositif de réception (21) est relié au châssis d'acheminement transversal (31) par l'intermédiaire d'au moins un élément élastique (28) qui est réalisé pour exercer une force de traction agissant au moins en partie le long de l'axe vertical d'andaineur (Z).

10. Andaineur selon l'une des revendications précédentes,
**caractérisé en ce que** le dispositif de réception (21) présente deux unités partielles (22) décalées l'une par rapport à l'autre le long de l'axe transversal d'andaineur (Y), lesquelles peuvent être inclinées l'une par rapport à l'autre autour d'un axe d'articulation (K) s'étendant au moins en partie le long de l'axe longitudinal d'andaineur (X), dans lequel les unités partielles (22) sont mobiles en hauteur, au moins en partie indépendamment l'une de l'autre, par rapport au châssis d'acheminement transversal (31).

11. Andaineur selon l'une des revendications précédentes,
**caractérisé en ce que** le châssis d'acheminement transversal (31) est relié au moins indirectement au châssis principal (2) par l'intermédiaire d'un bras central (8) ainsi que de deux bras latéraux (10) décalés latéralement le long de l'axe transversal d'andaineur (Y) et au moins en partie décalés verticalement le long de l'axe vertical d'andaineur (Z), dans lequel le bras central (8) et les bras latéraux (10) sont reliés de manière pivotante de part et d'autre, indépendamment les uns des autres, et dans lequel chaque bras latéral (10) peut pivoter par actionneur.

12. Andaineur selon la revendication 11, **caractérisé en ce que** le bras central (8) et les bras latéraux (10) sont reliés à un châssis de suspension (6) qui peut pivoter, par rapport au châssis principal (2), par actionneur autour d'un axe de pivotement de transport (T) s'étendant au moins en partie le long de l'axe transversal d'andaineur (Y).

13. Andaineur selon l'une des revendications précédentes,
**caractérisé en ce que** le châssis principal (2) présente deux avant-bras latéraux (5), dans lequel respectivement une unité d'andainage (20) est reliée au moins indirectement à un avant-bras latéral (5).
